(19) **Europäisches Patentamt**
**European Patent Office**
**Office européen des brevets**

(11) **EP 3 852 371 B1**

(12) **FASCICULE DE BREVET EUROPEEN**

(45) Date de publication et mention
de la délivrance du brevet:
**20.03.2024   Bulletin 2024/12**

(21) Numéro de dépôt: **21154498.6**

(22) Date de dépôt: **25.06.2010**

(51) Classification Internationale des Brevets (IPC):
**H04N 19/52** *(2014.01)*        **H04N 19/119** *(2014.01)*

(52) Classification Coopérative des Brevets (CPC):
**H04N 19/52; H04N 19/119**

(54) **PREDICTION D'UN VECTEUR MOUVEMENT D'UNE PARTITION D'IMAGE COURANTE POINTANT SUR UNE ZONE DE RÉFÉRENCE QUI RECOUVRE PLUSIEURS PARTITIONS D'IMAGE DE RÉFÉRENCE, CODAGE ET DECODAGE UTILISANT UNE TELLE PREDICTION**

VORHERSAGE EINES BEWEGUNGSVEKTORS EINES AKTUELLEN BILDAUSSCHNITTS, DER AUF EINEN REFERENZBEREICH ZEIGT, DER MEHRERE REFERENZBILDAUSSCHNITTE UMFASST, KODIERUNG UND DEKODIERUNG, DIE EINE SOLCHE VORHERSAGE BENUTZEN

PREDICTION OF A MOVEMENT VECTOR OF A CURRENT IMAGE PARTITION POINTING TO A REFERENCE AREA THAT COVERS SEVERAL REFERENCE IMAGE PARTITIONS, ENCODING AND DECODING USING SUCH A PREDICTION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **03.07.2009   FR 0954623**

(43) Date de publication de la demande:
**21.07.2021   Bulletin 2021/29**

(62) Numéro(s) de document de la (des) demande(s) initiale(s) en application de l'article 76 CBE:
**10745325.0 / 2 449 783**

(73) Titulaire: **Orange**
**92130 Issy-les-Moulineaux (FR)**

(72) Inventeurs:
• **JUNG, Joël**
**92326 Chatillon (FR)**

• **LAROCHE, Guillaume**
**92326 Chatillon (FR)**
• **THIESSE, Jean-Marc**
**92326 Chatillon (FR)**

(56) Documents cités:
**EP-A1- 1 351 510        WO-A1-2008/082158
WO-A2-2008/027192    US-A1- 2008 063 068**

• **JUAN LIU ET AL: "Adaptive Motion Vector Prediction Based on Spatiotemporal Correlation", WIRELESS COMMUNICATIONS, NETWORKING AND MOBILE COMPUTING, 2006. WICOM 2006.INTERNATIONAL CONFERENCE ON, IEEE, PI, 1 septembre 2006 (2006-09-01), pages 1-4, XP031074482, ISBN: 978-1-4244-0517-6**

**Description**

Arrière-plan de l'invention

La présente invention se rapporte de manière générale au domaine du traitement d'images, et plus précisément au codage et au décodage par compétition d'images numériques et de séquences d'images numériques.

Plusieurs procédés de codage et de décodage existent pour la transmission d'images. On distingue notamment des grands types de codage tels que le codage dit "intra" où une image est codée de manière autonome, c'est-à-dire sans référence à d'autres images, ou encore le codage dit "inter" qui consiste à coder une image courante par rapport à des images passées de manière à exprimer et ne transmettre que la différence entre ces images.

Les procédés de codage du type précité comprennent généralement une étape de codage prédictif selon laquelle des portions d'images, appelés blocs ou macroblocs, d'une image courante sont prédits par rapport à d'autres blocs ou macroblocs de référence, c'est-à-dire précédemment codés puis décodés.

Dans le cas par exemple de la norme H264/MPEG-4 AVC (d'après l'anglais "Advanced Video Coding"), le codage prédictif d'un macrobloc consiste à découper les macroblocs selon une pluralité de partitions ayant généralement la forme de blocs de plus petite taille.

Plus précisément dans le cas du codage inter conforme à la norme précitée, le macrobloc courant à coder peut être partitionné selon les modes 16x16, 8x16, 16x8 et 8x8. Si le mode 8x8 est sélectionné, chaque bloc 8x8 est à nouveau partitionné selon les modes 8x8, 4x8, 8x4 et 4x4. Chaque bloc courant est comparé à un ou plusieurs blocs respectivement d'une ou de plusieurs images de référence. On obtient alors un vecteur mouvement qui décrit le mouvement entre le bloc courant et le bloc de référence ayant la même position que le macrobloc courant dans l'image précédente. Un prédicteur de ce vecteur mouvement est alors calculé afin de coder le résiduel entre le vecteur mouvement précité et le vecteur mouvement prédicteur calculé.

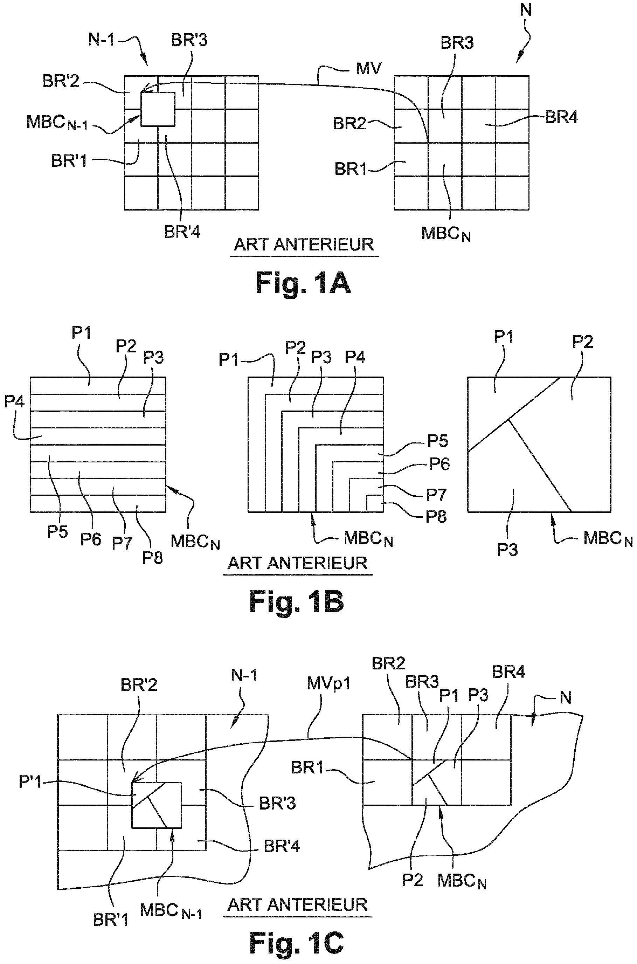

Une telle prédiction du vecteur mouvement n'est pas adaptée à tous les types de partitionnement et en particulier au cas où le macrobloc de référence recouvre plusieurs partitions de référence de l'image de référence. Une telle situation est représentée sur la figure 1A qui illustre le cas d'une prédiction temporelle pour un macrobloc courant à coder, noté $MBC_N$, d'une image N à coder conformément à la norme précitée. Dans l'exemple représenté, un tel macrobloc $MBC_N$ a une forme carrée et est de type 4x4. Le macrobloc $MBC_N$ est entouré par d'autres macroblocs BR1, BR2, BR3, BR4 qui sont situés au voisinage le plus proche de ce dernier et qui ont la même forme et taille que celles du macrobloc $MBC_N$.

Dans l'exemple représenté, le vecteur mouvement du macrobloc courant $MBC_N$, noté MV, pointe sur un macrobloc de référence $MBC_{N-1}$ d'une image de référence, notée N-1, qui est par exemple l'image précédente. Le macrobloc de référence $MBC_{N-1}$ a la même position que le macrobloc courant $MBC_N$ dans l'image précédente N-1. Une particularité du macrobloc de référence $MBC_{N-1}$ est qu'il recouvre des partitions de référence déjà codées puis décodées, notées BR'1, BR'2, BR'3 et BR'4 sur la figure 1A.

En application de la norme H264/AVC, le vecteur mouvement MV précité est prédit uniquement spatialement. Plus précisément, il est procédé au calcul d'un vecteur mouvement de référence qui est égal à un médian des vecteurs mouvement MV1, MV3, MV4, associés respectivement aux macroblocs de référence BR1, BR3, BR4. Dans certaines situations, le vecteur mouvement MV2, associé au macrobloc de référence BR2, peut être utilisé à la place de l'un des vecteurs MV1, MV3, MV4.

Par ailleurs, on voit depuis peu apparaître de nouveaux types de partitionnement du macrobloc courant à coder qui n'avaient pas été prévus dans la norme H264/AVC. Ainsi, comme représenté à la figure 1B, un macrobloc courant à coder $MBC_N$ peut être découpé en plusieurs partitions P1 à Pp de forme linéaire, en forme de L, ou bien de forme tout à fait arbitraire.

La norme H264/AVC ne prévoit pas de prédiction adaptée aux différents types de partitionnement de la figure 1B et au cas particulier où le macrobloc de référence ainsi partitionné recouvre plusieurs partitions de l'image de référence. Une telle situation est représentée sur la figure 1C qui illustre le cas d'une prédiction temporelle pour un macrobloc courant à coder, noté $MBC_N$, d'une image N à coder conformément à la norme précitée. Dans l'exemple représenté, un tel macrobloc $MBC_N$ est découpé selon trois partitions plus petites P1, P2, P3, qui sont de forme géométrique quelconque.

Dans l'exemple représenté, le vecteur mouvement de la première partition P1 du macrobloc courant $MBC_N$, noté MVp1, pointe sur une partition P'1 d'un macrobloc de référence $MBC_{N-1}$ d'une image de référence N-1 ayant la même position que le macrobloc courant $MBC_N$ dans l'image précédente N-1. Une particularité du macrobloc de référence $MBC_{N-1}$ est qu'il recouvre des partitions de référence déjà codées puis décodées, notées BR'1, BR'2, BR'3 et BR'4 sur la figure 1C.

En application de la norme H264/AVC, pour prédire le vecteur mouvement MVp1 précité, il est procédé au calcul d'un vecteur mouvement de référence qui est généralement égal à un médian spatial des vecteurs mouvement MV1, MV3, MV4, associés respectivement aux macroblocs de référence BR1, BR3, BR4.

Une telle prédiction spatiale du vecteur mouvement peut s'avérer manquer de précision compte tenu du fait que dans l'image N-1, il existe une différence de forme et de taille entre la partition de référence P'1 et les macroblocs de référence BR'1, BR'2, BR'3 et BR'4.

On connaît par ailleurs d'autres méthodes de calcul du vecteur mouvement prédicteur en vue de coder en Inter les partitions d'un macrobloc courant.

L'une d'entre elles est décrite dans la publication IEEE Transactions on Circuits and System for Vidéo Technology, Vol. 18, 1247-1257 (Sept.2008), de G Laroche, J. Jung, et B. Pesquet-Popescu et concerne les cas où, comme dans la norme H264/AVC, les macroblocs sont découpés selon une pluralité de partitions ayant généralement la forme de blocs de plus petite taille. Selon cette méthode, on prédit le vecteur mouvement d'un macrobloc d'une image courante par rapport à un vecteur de référence qui est choisi comme étant le vecteur pointant sur le pixel situé en haut et le plus à gauche du macrobloc ayant la même position que le macrobloc courant dans une image précédente.

Si l'on tente d'appliquer cette dernière méthode à la prédiction du vecteur MV de la figure 1A ou à celle du vecteur MVp1 de la figure 1C, les vecteurs MV et MVp1 seront chacun obtenus à partir d'un vecteur mouvement de référence qui est égal au vecteur mouvement MV'2 associé au macrobloc de référence BR'2, le pixel le plus à gauche du macrobloc de référence $MBC_{N-1}$ étant situé dans le macrobloc de référence BR'2 auquel est associé le vecteur mouvement MV'2.

La prédiction de vecteur mouvement obtenue avec cette méthode manque également de précision pour les mêmes raisons que celles évoquées plus haut. Le document « Adaptive Motion Vector Prediction Based on Spatiotemporal Correlation », Juan Liu et al, Wicom 2006, International Conférence on Wireless Communications, Networking and Mobile Computing, 01-09-2006, révèle une prédiction de vecteurs mouvement de partitions d'une image courante à partir d'une image de référence.

Objet et résumé de l'invention

Un des buts de l'invention est de remédier à des inconvénients de l'état de la technique précité.

A cet effet, l'invention est définie dans l'ensemble des revendications annexées.

Selon un premier aspect, la présente invention concerne un procédé de prédiction d'un vecteur mouvement d'une partition d'image courante par rapport à un vecteur mouvement d'une partition de référence ayant la même forme que la partition courante et appartenant à une image de référence qui est différente de l'image courante et qui a été préalablement découpée, à l'issue d'un codage puis d'un décodage, en une pluralité de n partitions.

Selon l'invention, dans le cas où la partition de référence recouvre un ensemble de k partitions de référence parmi la pluralité de n partitions de l'image de référence, avec k≤n, le vecteur mouvement de la partition d'image courante est déterminé à partir d'une fonction d'au moins un vecteur mouvement de référence appartenant à un ensemble de k vecteurs mouvement de référence associés respectivement aux k partitions de référence recouvertes.

Une telle disposition permet ainsi d'améliorer de façon importante la précision de la prédiction, en tenant compte :

- du partitionnement particulier du macrobloc courant ou du macrobloc de référence,
- des zones uniquement recouvertes des partitions de référence.

La prédiction selon l'invention est par ailleurs adaptable à tout type de méthode de calcul du vecteur mouvement prédit de la partition courante, telle qu'en particulier celle conforme à la norme H264/AVC et celle décrite dans la publication IEEE précitée.

Dans un mode de réalisation, la détermination du vecteur mouvement de la partition courante comprend les étapes de :

- calcul du nombre de pixels communs entre la partition de référence et respectivement les k partitions de référence recouvertes,
- comparaison du nombre de pixels communs calculé entre les k partitions de référence recouvertes, à partir d'un critère de comparaison prédéterminé.

Une telle disposition permet ainsi de sélectionner un vecteur mouvement de référence bien précis à partir d'une certaine caractéristique qui est ici fondée sur la quantité de pixels commun entre la partition de référence et les partitions de référence recouvertes.

Selon une première variante, le critère de comparaison consiste en une sélection, parmi les k vecteurs mouvement de référence associés respectivement aux k partitions de référence recouvertes, du vecteur mouvement de référence qui est associé à la partition de référence dont le nombre de pixels commun calculé est le plus élevé.

Selon une seconde variante, le critère de comparaison consiste en une pondération, par le nombre de pixels commun calculé, de la moyenne des k vecteurs mouvement de référence associés respectivement aux k partitions de référence recouvertes.

Selon une troisième variante, le critère de comparaison consiste en une sélection, parmi les k vecteurs mouvement de référence associés respectivement aux k partitions de référence recouvertes, du vecteur mouvement de référence qui est associé à la partition de référence recouverte qui a le plus de pixels à l'intérieur de la partition de référence qu'à l'extérieur de cette dernière.

Dans un autre mode de réalisation, la détermination du vecteur mouvement de la partition courante comprend les étapes de :

- calcul, pour chacune des k partitions de référence recouvertes, d'un coefficient qui est fonction du gradient spatial de la partition de référence,
- sélection du coefficient dont la valeur calculée est la plus élevée,
- sélection du vecteur mouvement de référence qui correspond à la partition de référence recouverte dont le coefficient a été sélectionné.

Une telle disposition permet ainsi de sélectionner un vecteur mouvement de référence bien précis à partir d'une certaine caractéristique qui est ici fondée sur le calcul d'un coefficient qui exprime un degré de confiance dans le choix du vecteur mouvement de référence qui est supposé être plus précis dans une zone de l'image qui contient des discontinuités que dans une zone de l'image homogène.

Selon une variante, le vecteur mouvement de la partition courante est déterminé à la suite d'une étape de calcul de la moyenne des k vecteurs mouvement de référence associés respectivement aux k partitions de référence recouvertes, une telle moyenne étant pondérée par les k coefficients calculés.

Dans encore un mode de réalisation, la détermination du vecteur mouvement de la partition courante comprend les étapes de :

- sélection d'un point particulier de la partition de référence,
- sélection du vecteur mouvement de référence associé à la partition de référence recouverte qui contient le point particulier sélectionné.

Une telle disposition permet ainsi de sélectionner un vecteur mouvement de référence bien précis à partir d'une certaine caractéristique qui est ici fondée sur une évaluation du positionnement de la partition de référence par rapport aux k partitions de référence recouvertes.

Dans encore un mode de réalisation, la détermination du vecteur mouvement de la partition courante comprend les étapes de :

- identification, dans la partition de référence, d'une caractéristique relative au contenu de l'image,
- sélection du vecteur mouvement de référence associé à la partition de référence recouverte qui contient ladite caractéristique.

Une telle disposition permet ainsi de sélectionner un vecteur mouvement de référence bien précis à partir d'une certaine caractéristique qui est ici fondée sur l'identification d'un motif, d'une couleur, d'un contour, etc... dans la partition de référence.

Selon un second aspect, la présente invention concerne un procédé de codage d'une image ou d'une séquence d'images générant un flux de données comportant des données représentatives d'au moins une partition d'image, un tel procédé comprenant une étape de prédiction d'un vecteur mouvement de la partition d'image.

Selon l'invention, l'étape de prédiction d'un tel procédé de codage est effectuée conformément au procédé de prédiction précité.

Selon un troisième aspect, la présente invention concerne un procédé décodage d'un flux de données représentatif d'une image ou d'une séquence d'images, le flux comportant des données représentatives d'au moins une partition d'image, un tel procédé comprenant une étape de prédiction d'un vecteur mouvement de la partition d'image.

Selon l'invention, l'étape de prédiction d'un tel procédé de décodage est effectuée conformément au procédé de prédiction précité.

Corrélativement, selon un quatrième aspect, la présente invention concerne un dispositif de prédiction d'un vecteur mouvement d'une partition d'image courante par rapport à un vecteur mouvement d'une partition de référence ayant la même forme que ladite partition courante et appartenant à une image de référence qui est différente de l'image courante et qui a été préalablement découpée, à l'issue d'un codage puis d'un décodage, en une pluralité de n partitions.

Selon l'invention, dans le cas où la partition de référence recouvre un ensemble de k partitions de référence parmi la pluralité de n partitions de l'image de référence, avec k≤n, un tel dispositif de prédiction comprend un module de calcul apte à déterminer le vecteur mouvement de la partition d'image courante à partir d'une fonction d'au moins un vecteur mouvement de référence appartenant à un ensemble de k vecteurs mouvement de référence associés respectivement aux k partitions de référence recouvertes.

Corrélativement, selon un cinquième aspect, la présente invention concerne un dispositif de codage d'une image ou d'une séquence d'images générant un flux de données comportant des données représentatives d'au moins une partition d'image, un tel dispositif comprenant des moyens de prédiction d'un vecteur mouvement de la partition d'image.

Selon l'invention, le dispositif de prédiction d'un tel dispositif de codage est conforme au dispositif de prédiction précité.

Corrélativement, selon un sixième aspect, la présente invention concerne un dispositif de décodage de décodage d'un flux de données représentatif d'une image ou d'une séquence d'images, le flux comportant des données représentatives d'au moins une partition d'image, un tel dispositif comprenant des moyens de prédiction d'un vecteur mouvement de la partition d'image.

Selon l'invention, le dispositif de prédiction d'un tel dispositif de décodage est conforme au dispositif de prédiction précité.

L'invention concerne encore un programme d'ordinateur comportant des instructions pour mettre en oeuvre l'un des procédés selon l'invention, lorsqu'il est exécuté sur un ordinateur.

Le procédé de codage, le procédé de décodage, le dispositif de prédiction, le dispositif de codage et le dispositif de décodage présentent au moins les mêmes avantages que ceux conférés par le procédé de prédiction selon la présente invention.

Brève description des dessins

D'autres caractéristiques et avantages apparaîtront à la lecture d'un mode de réalisation préféré décrit en référence aux figures dans lesquelles:

- la figure 1A représente un exemple de prédiction temporelle de l'art antérieur qui exploite les corrélations temporelles entre un macrobloc courant à coder d'une image N et un macrobloc de référence d'une image précédente N-1, le macrobloc de référence ayant une forme carrée et recouvrant plusieurs macrobloc de référence voisins,
- la figure 1B représente un macrobloc découpé selon différents types de partitions de l'art antérieur,
- la figure 1C représente un exemple de prédiction temporelle de l'art antérieur qui exploite les corrélations temporelles entre un macrobloc courant à coder d'une image N et un macrobloc de référence d'une image précédente N-1, le macrobloc de référence étant découpé selon plusieurs partitions de forme arbitraire et recouvrant plusieurs macroblocs de référence voisins,
- la figure 2 représente les étapes du procédé de codage selon l'invention,
- la figure 3 représente un mode de réalisation d'un dispositif de codage selon l'invention,
- la figure 4 représente un exemple de prédiction temporelle selon l'invention qui exploite les corrélations temporelles entre le macrobloc courant à coder d'une image courante et les macroblocs de référence d'une image précédente,
- la figure 5 représente un dispositif de décodage selon l'invention,
- la figure 6 représente des étapes du procédé de décodage selon l'invention.

Description détaillée d'un mode de réalisation

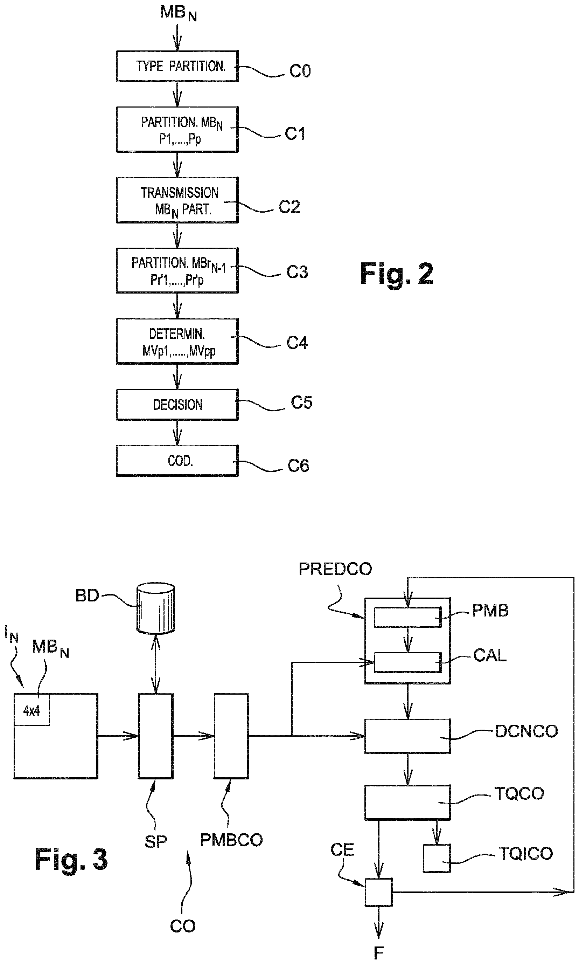

Un mode de réalisation de l'invention va maintenant être décrit, dans lequel le procédé de codage selon l'invention est utilisé pour coder en Inter une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C0 à C7, représentées à la **figure 2.**

Le procédé de codage selon l'invention est implémenté dans un dispositif de codage CO représenté à la **figure 3.**

La première étape C0, représentée à la **figure 2,** est la sélection, pour un macrobloc appartenant à une image de la séquence d'images à coder, notée $I_N$ sur la **figure 3,** d'un partitionnement particulier associé à ce macrobloc.

Il convient de noter que l'étape C0 peut être facultative, la prédiction du vecteur mouvement du macrobloc courant pouvant être effectuée en considérant ce dernier dans sa totalité, c'est-à-dire comme une seule et unique partition.

Au cours de l'étape C0, un macrobloc $MB_N$, par exemple de taille 4x4, et appartenant à l'image $I_N$, est appliqué en entrée d'un module SP de sélection de partitionnement représenté à la **figure 3.**

Ce module de partitionnement SP utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998). Elles ne seront donc pas décrites plus avant.

Les différents types d'algorithmes de partitionnement possibles sont regroupés dans une base de données BD du codeur CO. Ils permettent d'obtenir un découpage du macrobloc courant en une pluralité de partitions soit de forme rectangulaire ou carrée, soit d'autres formes géométriques, telles que par exemple des formes sensiblement linéaires, soit de forme tout à fait arbitraire.

Dans l'exemple représenté, le module de sélection SP sélectionne un partitionnement de type arbitraire.

L'étape suivante C1 représentée à la **figure 2** est le découpage du macrobloc $MB_N$ en un nombre de p partitions à prédire.

Le macrobloc $MB_N$ est découpé en par exemple trois partitions P1, P2 et P3 de forme arbitraire. Un tel découpage est effectué par un module PMBCO de partitionnement de macroblocs représenté à la **figure 3** qui utilise un algorithme classique de partitionnement.

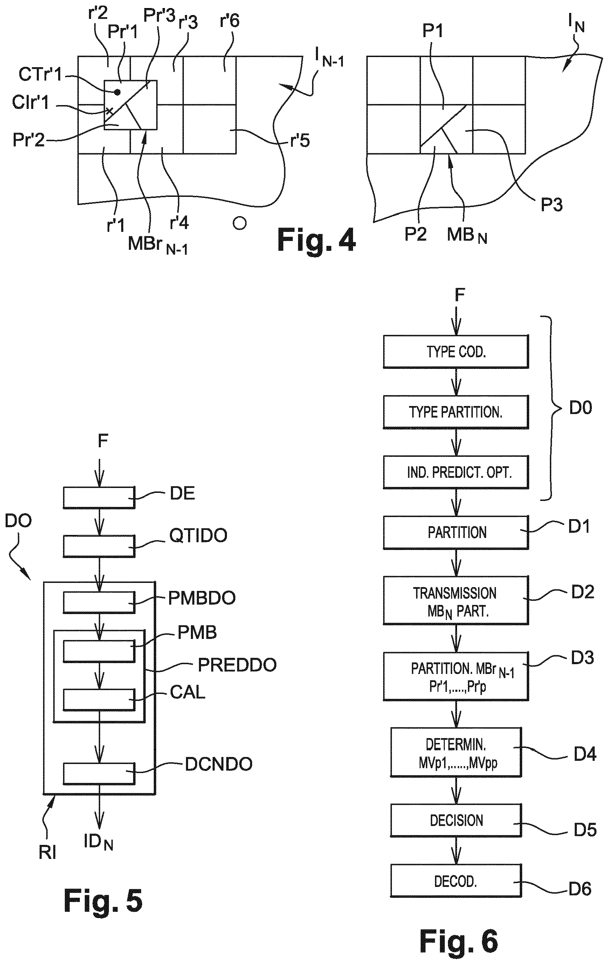

La **figure 4** représente le macrobloc $MB_N$ qui a été obtenu après un tel partitionnement.

A la suite de l'étape de partitionnement C1, au cours d'une étape C2 représentée à **la figure 2,** le module de partitionnement PMBCO transmet le macrobloc $MB_N$ qui vient d'être partitionné à un module de prédiction PREDCO représenté à **la figure 3.**

De façon classique, un tel module de prédiction PREDCO est destiné à prédire le macrobloc courant $MB_N$ partitionné par rapport à un macrobloc de référence déjà codé puis décodé, noté $MBr_{N-1}$ sur la **figure 4,** lequel a la même position que le macrobloc courant $MB_N$ dans une image précédente $I_{N-1}$ qui a été préalablement découpée à l'issue d'un codage puis d'un décodage, en une pluralité de n partitions r'1, r'2,....,r'n.

Conformément à l'invention, le macrobloc de référence $MBr_{N-1}$ recouvre un ensemble de k partitions de référence r'1, r'2,...r'k, avec k≤n. Dans l'exemple représenté, le macrobloc de référence $MBr_{N-1}$ recouvre partiellement les quatre partitions de référence r'1, r'2, r'3 et r'4. Il va de soi que dans d'autres modes de réalisation possibles, le macrobloc de référence $MBr_{N-1}$ peut recouvrir complètement une ou plusieurs des partitions de référence r'1, r'2, r'3 et r'4.

En référence à **la figure 3,** un tel macrobloc de référence $MBr_{N-1}$ est codé conformément à la norme H.264/MPEG-4AVC, c'est-à-dire qu'il subit, de façon connue en soi:

- un codage par transformée en cosinus discrète et quantification qui est effectué par un module TQCO de transformée et de quantification,
- puis un décodage par transformée en cosinus discrète inverse et quantification inverse, lequel est effectué par le module TQICO de transformée et de quantification inverse.

En référence toujours à la **figure 3,** le module de prédiction PREDCO comprend, selon l'invention:

- un module de partitionnement PMB destiné à découper le macrobloc de référence $MBr_{N-1}$ selon une pluralité de partitions de référence,
- un module de calcul CAL destiné à calculer chaque vecteur mouvement MVp1, MVp2,...,MVpp qui sont associés respectivement aux partitions P1, P2,...,Pp du macrobloc courant $MB_N$, à partir d'une fonction d'au moins un vecteur mouvement de référence appartenant à un ensemble de k vecteurs mouvement de référence MVr'1, MVr'2,..., MVr'k qui sont associés respectivement aux k partitions de référence recouvertes r'1, r'2,...,r'k.

Au cours de l'étape C3 représentée à la **figure 2,** le module de partitionnement PMB de la **figure 3** procède au découpage du macrobloc de référence $MBr_{N-1}$ selon p partitions de référence. Dans l'exemple représenté à la **figure 4,** le macrobloc de référence $MBr_{N-1}$ est découpé de façon identique au macrobloc courant $MB_N$, soit selon trois partitions Pr'1, Pr'2 et Pr'3 qui sont toutes de forme et de taille différentes.

Au cours de l'étape C4 représentée à la **figure 2,** le module de calcul CAL de la **figure 3** calcule, pour chaque partition courante P1, P2 et P3, le vecteur mouvement prédit MVp1, MVp2 et MVp3 qui lui est associé, selon les différentes méthodes selon l'invention décrites ci-dessous.

Selon une première méthode, le module CAL détermine le vecteur mouvement prédit MVp1 de la partition courante P1 en fonction des vecteurs mouvement de référence MVr'1, MVr'2, MVr'3 et MVr'4 associés respectivement aux quatre partitions de référence recouvertes r'1, r'2, r'3 et r'4 représentées à la **figure 4.** Une telle détermination consiste par exemple à calculer la moyenne des vecteurs mouvement de référence MVr'1, MVr'2, MVr'3 et MVr'4 conformément à l'équation ci-dessous:

$$MVp1 = Moy\ (MVr'1,\ MVr'2,\ MVr'3,\ MVr'4)$$

Selon une seconde méthode, en référence à la **figure 4,** le module CAL détermine le vecteur mouvement prédit MVp1 comme étant égal au vecteur mouvement de référence associé à la partition de référence recouverte ayant le plus grand nombre de pixels en commun avec la partition de référence Pr'1 du macrobloc de référence MBr$_{N-1}$.

Dans l'exemple représenté à la **figure 4,** MVp1 =MVr'2.

Selon une première variante de cette seconde méthode, le module CAL détermine le vecteur mouvement prédit MVp1 comme étant égal au vecteur mouvement de référence associé à la partition de référence recouverte qui a le plus fort pourcentage de pixels en commun avec la partition de référence Pr'1 du macrobloc de référence MBr$_{N-1}$.

Dans l'exemple représenté **figure 4,** MVp1=MVr'2.

Selon une seconde variante de cette seconde méthode, le module CAL détermine une moyenne des vecteurs mouvement de référence MVr'1, MVr'2, MVr'3 et MVr'4 qui est pondérée par le nombre de pixels commun entre la partition de référence Pr'1 du macrobloc MBr$_{N-1}$ et chacune des partitions de référence recouvertes r'1, r'2, r'3 et r'4. Une telle détermination revient à calculer le vecteur mouvement prédit MVp1 conformément à l'équation ci-dessous:

$$MVp1 = \frac{1}{T}\left[ \sum_{k=1}^{K} \lceil pr'1 \cap r'_k \rceil \cdot MVr'k \right]$$

avec :

- K=4,
- T représentant le nombre de pixels constituant le macrobloc de référence MBr$_{N-1}$,
- $\lceil Pr'1 \cap r'k \rceil$ représentant le nombre de pixels commun entre la partition de référence Pr'1 du macrobloc MBr$_{N-1}$ et chacune des partitions de référence recouvertes r'1, r'2, r'3 et r'4.

Dans l'exemple représenté à la **figure 4,** MVp1 =MVr'2.

A titre d'alternative, la moyenne précitée peut être pondérée par le nombre de pixels communs moins le nombre de pixels non communs.

Une autre alternative consiste à pondérer la moyenne par le pourcentage de pixels en commun entre la partition Pr'1 du macrobloc de référence MBr$_{N-1}$ et chacune des partitions de référence r'1, r'2, r'3 et r'4.

Encore une autre alternative est de déterminer le vecteur mouvement prédit MVp1 comme étant égal au vecteur mouvement de référence associé à la partition de référence recouverte qui a le plus de pixels à l'intérieur de Pr'1 qu'à l'extérieur de Pr'1.

Selon une troisième méthode, en référence à la **figure 4,** le module de calcul CAL :

- détermine, pour chacune des k partitions de référence recouvertes r'1, r'2, r'3, r'4, un coefficient C$_k$ (avec k=4) qui est fonction du gradient spatial g de ladite partition de référence Pr'1,
- sélectionne le coefficient C$_j$ (avec 1≤j≤k) dont la valeur calculée est la plus élevée, conformément à l'équation ci-dessous:

$$C_j = \arg \max_k \{C_k\} \text{ où } C_k = \frac{1}{\lceil Pr'1 \cap r'_k \rceil} \sum_{i=1}^{\lceil Pr'1 \cap r'_k \rceil} \sqrt{g_x^2(i) + g_y^2(i)}$$

Cette troisième méthode propose une première alternative selon laquelle le module de calcul CAL détermine le vecteur mouvement prédit MVp1 comme étant égal au vecteur mouvement de référence associé à la partition de référence recouverte correspondant au coefficient calculé C$_j$.

Cette troisième méthode propose une seconde alternative selon laquelle le module de calcul CAL détermine le vecteur mouvement prédit MVp1 comme étant égal à la moyenne des vecteurs mouvement de référence MVr'1, MVr'2, MVr'3 et MVr'4 qui est pondérée par les coefficients calculés C$_1$, C$_2$, C$_3$, C4.

Selon une quatrième méthode, en référence à la **figure 4,** le module de calcul CAL identifie en premier lieu un point particulier de la partition de référence Pr'1, par exemple le centre de cette dernière, noté CTr'1. Le centre CTr'1 est calculé au moyen d'un algorithme qui minimise la somme des distances par rapport à tous les points de la partition de référence Pr'1.

En second lieu, le module de calcul CAL détermine le vecteur mouvement prédit MVp1 comme étant égal au vecteur mouvement de référence associé à la partition de référence recouverte qui contient le point particulier sélectionné, soit le centre CTr'1. Dans l'exemple représenté, c'est la partition de référence r'2 qui contient le centre CTr'1 et donc MVp1= MVr'2.

Selon une cinquième méthode, en référence à la **figure 4,** le module de calcul CAL identifie en premier lieu, dans la partition de référence Pr'1, une caractéristique particulière relative au contenu de l'image. Dans l'exemple représenté, une telle caractéristique est illustrée par une croix incrustée dans l'image $I_{N-1}$, notée Clr'1.

En second lieu, le module de calcul CAL détermine le vecteur mouvement prédit MVp1 comme étant égal au vecteur mouvement de référence associé à la partition de référence recouverte qui contient la caractéristique sélectionnée, soit la croix Clr'1. Dans l'exemple représenté, c'est la partition de référence r'1 qui contient la croix Clr'1 et donc MVp1 = MVr'1.

A titre d'alternative à cette cinquième méthode, la caractéristique relative au contenu de l'image peut être une couleur particulière, un motif particulier, un contour qui traverse la partition de référence Pr'1, ou autres particularités de l'image brisant l'homogénéité de cette dernière.

A l'issue de ladite étape de calcul C4 selon l'une ou l'autre des méthodes précitées selon l'invention, le module de calcul de prédiction PREDCO délivre alors un premier vecteur prédit MVp1 qui, dans le cas où celui-ci est retenu par le codeur CO comme étant le type de vecteur mouvement optimal, est immédiatement codé par le module de transformée et de quantification TQCO, puis décodé par le module TQICO de transformée et de quantification inverse, lesquels sont représentés à la **figure 3.**

L'étape C4 précitée est ensuite réitérée de façon à prédire les autres vecteurs mouvement MVp2 et MVp3 qui sont associés respectivement aux partitions P2 et P3 du macrobloc courant $MB_N$.

Une fois différentes prédictions possibles calculées par le module de calcul de prédiction PREDCO, au cours d'une étape C5 représentée à la **figure 2,** un module de décision DCNCO, représenté à la **figure 3,** parcourt les macroblocs partitionnés de l'image $I_N$ et choisit, dans cette étape C5, le mode de prédiction utilisé pour coder chacun de ces macroblocs. Parmi les prédictions possibles pour un macrobloc, le module de décision DCNCO choisit la prédiction optimale selon un critère débit distorsion bien connu de l'homme du métier.

En référence à la **figure 2,** chaque macrobloc prédit est codé, au cours d'une étape C6, comme dans la norme H.264/MPEG-4 AVC.

En référence à la **figure 3,** une fois ce codage structurel effectué par le module de décision DCNCO, les coefficients de résidus s'ils existent, correspondants aux blocs de l'image $I_N$, sont envoyés au module TOCO de transformée et de quantification, pour subir des transformées en cosinus discrètes puis une quantification. Les tranches de macroblocs avec ces coefficients quantifiés sont ensuite transmises à un module CE de codage entropique représenté, pour produire, avec les autres images de la séquence vidéo déjà codées de la même façon que l'image $I_N$, un flux vidéo F, binaire, codé selon l'invention.

Le flux binaire F ainsi codé est transmis par un réseau de communication, à un terminal distant. Celui-ci comporte un décodeur DO selon l'invention, représenté à la **figure 5.**

Le flux binaire F est d'abord envoyé à un module DE de décodage entropique, décodage inverse de celui effectué par le module de codage entropique CE représenté à **la figure 3**. Puis, pour chaque macrobloc d'image à reconstruire, les coefficients décodés par le module DE sont envoyés à un module OTIDO de quantification inverse et de transformée inverse.

Un module RI de reconstruction d'image reçoit alors des données décodées correspondant aux données produites par le module DCNCO (figure 3) à l'étape C5 de codage selon l'invention, aux erreurs de transmission près. Le module RI met en oeuvre des étapes D0 à D6 du procédé de décodage selon l'invention, telle que représentées à la **figure 6.** Un tel procédé de décodage selon l'invention est également implémenté de manière logicielle ou matérielle par modifications d'un décodeur initialement conforme à la norme H.264/MPEG-4 AVC.

La première étape D0 est le décodage de structures de données codées dans une tranche d'un macrobloc courant de l'image $I_N$ à décoder. De façon connue en soi, le module de reconstruction RI détermine à partir des données de ladite tranche de macrobloc:

- le type de codage desdites données, Intra ou Inter: Inter selon l'invention,
- le type de partitionnement du macrobloc à reconstruire, Inter 4x4, 8x8, ligne, etc...: Inter 4x4 dans le mode de réalisation décrit,
- l'indice du prédicteur optimal tel que sélectionné par le module de décision DCNCO à l'étape C5 précitée.

L'étape suivante D1 représentée à la **figure 6** est le découpage du macrobloc courant à décoder, conformément au partitionnement déterminé à l'étape D0. A cet effet, en référence à la **figure 5,** un module PMBDO de partitionnement de macroblocs, qui ressemble en tous points à celui représenté à la **figure 3,** découpe le macrobloc en une pluralité de p partitions, soit trois partitions de forme arbitraire dans l'exemple représenté.

Au cours d'une étape D2 représentée à la **figure 6,** le module de partitionnement PMBDO transmet le macrobloc courant à décoder et qui vient d'être partitionné en p=3 partitions, à un module de prédiction PREDDO représenté à la **figure 5,** qui est en tous points semblable au module de prédiction PREDCO du codeur CO de la **figure 3,** et qui, pour cette raison, ne sera pas décrit à nouveau en détail.

Au cours des étapes D3 et D4 représentées à la **figure 6,** le module de prédiction PREDDO de la **figure 5** effectue le même algorithme que celui effectué par le module de prédiction PREDCO du codeur CO précité, de façon à obtenir un macrobloc courant dont les vecteurs mouvement associés ont été prédits conformément à l'une ou l'autre des méthodes décrites ci-dessus.

Au cours d'une étape D5, un module de décision DCNDO choisit la prédiction optimale selon un critère débit distorsion bien connu de l'homme du métier.

Chaque macrobloc prédit est ensuite décodé, au cours d'une étape D6, comme dans la norme H.264/MPEG-AVC.

Une fois tous les macroblocs de l'image $I_N$ décodés, en référence à la **figure 5,** le module RI de reconstruction d'image fournit en sortie du décodeur DO, une image $ID_N$ correspondant au décodage de l'image $I_N$.

Compte tenu du fait que l'algorithme de prédiction effectué au décodeur DO est en tous point le même que celui effectué au codeur CO, le coût de l'information induit par les prédicteurs utilisés s'en trouve fortement réduit.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de prédiction d'un vecteur mouvement d'au moins une partition (P1 ; $MB_N$) d'un bloc d'une image courante par rapport à un vecteur mouvement d'au moins une partition de référence (Pr'1 ; $MBr_{N-1}$) d'un bloc de référence correspondant au bloc courant, dans une image de référence qui est différente de l'image courante et qui est partitionnée en une pluralité de n blocs de référence (r'1, r'2,...,r'n), ledit vecteur mouvement de ladite au moins une partition du bloc de l'image courante pointant dans l'image de référence sur ladite au moins une partition de référence ayant la même forme que ladite au moins une partition du bloc de l'image courante,

   ledit procédé étant **caractérisé en ce que** dans le cas où ladite au moins une partition de référence recouvre un ensemble de k blocs de référence parmi ladite pluralité de n blocs de référence (r'1, r'2,...,r'n) de l'image de référence, avec k≤n, ledit vecteur mouvement de ladite au moins une partition du bloc de l'image courante est déterminé à partir d'au moins un vecteur mouvement de référence appartenant à un ensemble de k vecteurs mouvement de référence (MVr'1, MVr'2,...,MVr'k) associés respectivement aux k blocs de référence recouverts, la détermination du vecteur mouvement de ladite au moins une partition du bloc de l'image courante comprenant les étapes de :

   - sélection d'un point particulier de la partition de référence, ledit point particulier étant le centre de ladite partition de référence,
   - sélection du vecteur mouvement de référence associé au bloc de référence recouvert qui contient le centre de ladite partition de référence,

   le centre de ladite partition de référence étant calculé comme le point minimisant la somme des distances par rapport à tous les points de ladite partition de référence.

2. Procédé de prédiction selon la revendication 1, dans lequel ledit vecteur mouvement déterminé est un vecteur mouvement prédit qui est égal au vecteur de mouvement de référence sélectionné.

3. Procédé de prédiction selon la revendication 1 ou la revendication 2, dans lequel la forme de la partition du bloc de l'image courante appartient au groupe comprenant :

   - une forme rectangulaire,
   - une forme carrée,
   - une forme géométrique autre que rectangulaire ou carrée.

4. Procédé de prédiction selon l'une quelconque des revendications 1 à 3, comprenant ce qui suit :

   - comparer ledit vecteur mouvement déterminé à au moins un autre vecteur mouvement qui est déterminé selon une méthode de détermination différente de celle dudit vecteur mouvement déterminé, ladite comparaison étant mise en oeuvre selon un critère de performance de codage,

- parmi le vecteur mouvement déterminé et ledit au moins un autre vecteur mouvement déterminé, sélectionner celui qui optimise la prédiction selon ledit critère.

5. Procédé de prédiction selon la revendication 4, dans lequel la détermination dudit au moins un autre vecteur mouvement comprend les étapes de :

- calcul du nombre de pixels communs entre la partition de référence correspondante et respectivement les k partitions de référence recouvertes,
- comparaison du nombre de pixels communs calculé entre les k partitions de référence recouvertes, à partir d'un critère de comparaison prédéterminé.

6. Procédé de prédiction selon la revendication 4, dans lequel la détermination dudit au moins un autre vecteur mouvement comprend les étapes de :

- calcul, pour chacune des k partitions de référence recouvertes, d'un coefficient qui est fonction du gradient spatial de ladite partition de référence correspondante,
- sélection du coefficient dont la valeur calculée est la plus élevée,
- sélection du vecteur mouvement de référence qui correspond à la partition de référence recouverte dont le coefficient a été sélectionné.

7. Procédé de prédiction selon la revendication 4, dans lequel la détermination dudit au moins un autre vecteur mouvement comprend les étapes de :

- calcul, pour chacune des k partitions de référence recouvertes, d'un coefficient qui est fonction du gradient spatial de ladite partition de référence correspondante,
- calcul de la moyenne des k vecteurs mouvement de référence associés respectivement aux k partitions de référence recouvertes, ladite moyenne étant pondérée par lesdits k coefficients calculés.

8. Procédé de prédiction selon la revendication 4, dans lequel la détermination dudit au moins un autre vecteur mouvement comprend les étapes de :

- identification, dans la partition de référence correspondante, d'une caractéristique relative au contenu de l'image,
- sélection du vecteur mouvement de référence associé à la partition de référence recouverte qui contient ladite caractéristique.

9. Procédé de codage d'une image ou d'une séquence d'images générant un flux (F) de données comportant des données représentatives d'au moins une partition d'un bloc d'une image courante, ledit procédé comprenant une étape de prédiction d'un vecteur mouvement de ladite au moins une partition,
ledit procédé étant **caractérisé en ce que** ladite prédiction est effectuée conformément au procédé selon l'une quelconque des revendications 1 à 8.

10. Procédé de décodage d'un flux (F) de données représentatif d'une image ou d'une séquence d'images, ledit flux comportant des données représentatives d'au moins une partition d'un bloc d'une image courante, ledit procédé comprenant une étape de prédiction d'un vecteur mouvement de ladite au moins une partition,
ledit procédé étant **caractérisé en ce que** ladite prédiction est effectuée conformément au procédé selon l'une quelconque des revendications 1 à 3 et 5 à 8.

11. Dispositif de prédiction (PREDCO) d'un vecteur mouvement d'au moins une partition d'un bloc (P1 ; $MB_N$) d'une image courante par rapport à un vecteur mouvement d'au moins une partition de référence (Pr'1 ; $MBr_{N-1}$) d'un bloc de référence correspondant au bloc courant, dans une image de référence qui est différente de l'image courante et qui est partitionnée en une pluralité de n blocs de référence (r'1, r'2,...,r'n) déjà codés puis décodés, ledit vecteur mouvement de ladite au moins une partition du bloc de l'image courante pointant dans l'image de référence sur ladite au moins une partition de référence ayant la même forme que ladite au moins une partition du bloc de l'image courante, le dispositif de prédiction étant **caractérisé en ce que** dans le cas où ladite au moins une partition de référence recouvre un ensemble de k blocs de référence parmi ladite pluralité de n blocs (r'1, r'2,...,r'n) de l'image de référence, avec k≤n, le dispositif de prédiction comprend un module (CAL) de calcul apte à déterminer ledit vecteur mouvement de ladite au moins une partition du bloc de l'image courante à partir d'au moins un vecteur mouvement de référence appartenant à un ensemble de k vecteurs mouvement de référence (MVr'1, MVr'2,...,MVr'k) associés respectivement aux k blocs de référence recouverts, ledit module de calcul comprenant :

- des moyens de sélection d'un point particulier de ladite au moins une partition de référence, ledit point particulier étant le centre de ladite partition de référence,
- des moyens de sélection du vecteur mouvement de référence associé au bloc de référence recouvert qui contient le centre de ladite partition de référence,

le centre de ladite partition de référence étant calculé comme le point minimisant la somme des distances par rapport à tous les points de ladite partition de référence.

**12.** Dispositif de codage (CO) d'une image ou d'une séquence d'images générant un flux (F) de données comportant des données représentatives d'au moins une partition d'un bloc d'une image courante, ledit dispositif comprenant des moyens de prédiction d'un vecteur mouvement de ladite au moins une partition dudit bloc, **caractérisé en ce que** lesdits moyens de prédiction sont contenus dans un dispositif de prédiction (PREDCO) conforme au dispositif selon la revendication 11.

**13.** Dispositif (DO) de décodage d'un flux (F) de données représentatif d'une image ou d'une séquence d'images, ledit flux (F) comportant des données représentatives d'au moins une partition d'un bloc d'une image courante, ledit dispositif comprenant des moyens de prédiction d'un vecteur mouvement de ladite au moins une partition dudit bloc, **caractérisé en ce que** lesdits moyens de prédiction sont contenus dans un dispositif de prédiction (PREDDO) conforme au dispositif selon la revendication 11.

**14.** Programme d'ordinateur comportant des instructions pour mettre en oeuvre l'un ou l'autre des procédés selon l'une quelconque des revendications 1 à 10, lorsqu'il est exécuté sur un ordinateur.

**Patentansprüche**

**1.** Verfahren zur Prädiktion eines Bewegungsvektors mindestens einer Partition (P1; $MB_N$) eines Blocks eines aktuellen Bilds bezüglich eines Bewegungsvektors mindestens einer Bezugspartition (Pr'1; $MBr_{N-1}$) eines Bezugsblocks entsprechend dem aktuellen Block, in einem Bezugsbild, das sich vom aktuellen Bild unterscheidet und das in eine Vielzahl von n Bezugsblöcken (r'1, r'2, ..., r'n) partitioniert ist, wobei der Bewegungsvektor der mindestens einen Partition des Blocks des aktuellen Bilds im Bezugsbild auf die mindestens eine Bezugspartition zeigt, die die gleiche Form wie die mindestens eine Partition des Blocks des aktuellen Bilds hat,

wobei das Verfahren **dadurch gekennzeichnet ist, dass** in dem Fall, in dem die mindestens eine Bezugspartition eine Einheit von k Bezugsblöcken unter der Vielzahl von n Bezugsblöcken (r'1, r'2, ..., r'n) des Bezugsbilds überdeckt, mit k≤n, der Bewegungsvektor der mindestens einen Partition des Blocks des aktuellen Bilds ausgehend von mindestens einem Bezugsbewegungsvektor bestimmt wird, der zu einer Einheit von k Bezugsbewegungsvektoren (MVr'1, MVr'2, ..., MVr'k) gehört, die den überdeckten k Bezugsblöcken zugeordnet sind, wobei die Bestimmung des Bewegungsvektors der mindestens einen Partition des Blocks des aktuellen Bilds die folgenden Schritte enthält:

- Auswahl eines einzelnen Punkts der Bezugspartition, wobei der einzelne Punkt die Mitte der Bezugspartition ist,
- Auswahl des dem überdeckten Bezugsblock zugeordneten Bezugsbewegungsvektors, der die Mitte der Bezugspartition enthält,

wobei die Mitte der Bezugspartition als der Punkt berechnet wird, der die Summe der Abstände bezüglich aller Punkte der Bezugspartition minimiert.

**2.** Prädiktionsverfahren nach Anspruch 1, wobei der bestimmte Bewegungsvektor ein vorhergesagter Bewegungsvektor ist, der gleich dem ausgewählten Bezugsbewegungsvektor ist.

**3.** Prädiktionsverfahren nach Anspruch 1 oder Anspruch 2, wobei die Form der Partition des Blocks des aktuellen Bilds zu der Gruppe gehört, die enthält:

- eine rechteckige Form,
- eine quadratische Form,
- eine geometrische Form anders als rechteckig oder quadratisch.

4. Prädiktionsverfahren nach einem der Ansprüche 1 bis 3, das Folgendes enthält:

- Vergleich des bestimmten Bewegungsvektors mit mindestens einem anderen Bewegungsvektor, der gemäß einer anderen Bestimmungsmethode als diejenige des bestimmten Bewegungsvektors bestimmt wird, wobei der Vergleich gemäß einem Codierleistungskriterium durchgeführt wird,
- unter dem bestimmten Bewegungsvektor und dem mindestens einen anderen bestimmten Bewegungsvektor Auswahl desjenigen, der die Prädiktion gemäß dem Kriterium optimiert.

5. Prädiktionsverfahren nach Anspruch 4, wobei die Bestimmung des mindestens einen anderen Bewegungsvektors die folgenden Schritte enthält:

- Berechnung der Anzahl gemeinsamer Pixel zwischen der entsprechenden Bezugspartition und den überdeckten k Bezugspartitionen,
- Vergleich der berechneten Anzahl von gemeinsamen Pixeln zwischen den überdeckten k Bezugspartitionen ausgehend von einem vorbestimmten Vergleichskriterium.

6. Prädiktionsverfahren nach Anspruch 4, wobei die Bestimmung des mindestens einen anderen Bewegungsvektors die folgenden Schritte enthält:

- Berechnung eines Koeffizienten für jede der überdeckten k Bezugspartitionen, der vom räumlichen Gradienten der entsprechenden Bezugspartition abhängt,
- Auswahl des Koeffizienten, dessen berechneter Wert der höchste ist,
- Auswahl des Bezugsbewegungsvektors, der der überdeckten Bezugspartition entspricht, deren Koeffizient ausgewählt wurde.

7. Prädiktionsverfahren nach Anspruch 4, wobei die Bestimmung des mindestens einen anderen Bewegungsvektors die folgenden Schritte enthält:

- Berechnung eines Koeffizienten für jede der überdeckten k Bezugspartitionen, der vom räumlichen Gradienten der entsprechenden Bezugspartition abhängt,
- Berechnung des Mittelwerts der k Bezugsbewegungsvektoren, die den überdeckten k Bezugspartitionen zugeordnet sind, wobei der Mittelwert von den berechneten k Koeffizienten gewichtet wird.

8. Prädiktionsverfahren nach Anspruch 4, wobei die Bestimmung des mindestens einen anderen Bewegungsvektors die folgenden Schritte enthält:

- Identifizierung einer Charakteristik bezüglich des Inhalts des Bilds in der entsprechenden Bezugspartition,
- Auswahl des Bezugsbewegungsvektors, der der überdeckten Bezugspartition zugeordnet ist, die die Charakteristik enthält.

9. Verfahren zur Codierung eines Bilds oder einer Bilderfolge, das einen Datenstrom (F) erzeugt, der für mindestens eine Partition eines Blocks eines aktuellen Bilds repräsentative Daten aufweist, wobei das Verfahren einen Schritt der Prädiktion eines Bewegungsvektors der mindestens einen Partition enthält, wobei das Verfahren **dadurch gekennzeichnet ist, dass** die Prädiktion gemäß dem Verfahren nach einem der Ansprüche 1 bis 8 ausgeführt wird.

10. Verfahren zur Decodierung eines Datenstroms (F), der für ein Bild oder eine Bilderfolge repräsentativ ist, wobei der Strom für mindestens eine Partition eines Blocks eines aktuellen Bilds repräsentative Daten aufweist, wobei das Verfahren einen Schritt der Prädiktion eines Bewegungsvektors der mindestens einen Partition enthält, wobei das Verfahren **dadurch gekennzeichnet ist, dass** die Prädiktion gemäß dem Verfahren nach einem der Ansprüche 1 bis 3 und 5 bis 8 ausgeführt wird.

11. Vorrichtung zur Prädiktion (PREDCO) eines Bewegungsvektors mindestens einer Partition eines Blocks (P1; $MB_N$) eines aktuellen Bilds bezüglich eines Bewegungsvektors mindestens einer Bezugspartition (Pr'1; $MBr_{N-1}$) eines dem aktuellen Block entsprechenden Bezugsblocks, in einem Bezugsbild, das sich vom aktuellen Bild unterscheidet und das in eine Vielzahl von bereits codierten und dann decodierten n Bezugsblöcken (r'1, r'2, ..., r'n) partitioniert ist, wobei der Bewegungsvektor der mindestens einen Partition des Blocks des aktuellen Bilds im Bezugsbild auf die mindestens eine Bezugspartition zeigt, die die gleiche Form hat wie die mindestens eine Partition des Blocks des aktuellen Bilds, wobei die Prädiktionsvorrichtung **dadurch gekennzeichnet ist, dass** in dem Fall, in dem die mindestens eine Bezugspartition eine Einheit von k Bezugsblöcken unter der Vielzahl von n Blöcken (r'1, r'2, ..., r'n) des Bezugsbilds überdeckt, mit k≤n, die Prädiktionsvorrichtung ein Rechenmodul (CAL) enthält, das geeignet ist, den Bewegungsvektor der mindestens einen Partition des Blocks des aktuellen Bilds ausgehend von mindestens einem Bezugsbewegungsvektor zu bestimmen, der zu einer Einheit von k Bezugsbewegungsvektoren (MVr'1, MVr'2, ..., MVr'k) gehört, die den überdeckten k Bezugsblöcken zugeordnet sind, wobei das Rechenmodul enthält:

- Auswahleinrichtungen eines einzelnen Punkts der mindestens einen Bezugspartition, wobei der einzelne Punkt die Mitte der Bezugspartition ist,
- Auswahleinrichtungen des dem überdeckten Bezugsblock zugeordneten Bezugsbewegungsvektors, der die Mitte der Bezugspartition enthält,

wobei die Mitte der Bezugspartition als der Punkt berechnet wird, der die Summe der Abstände bezüglich aller Punkte der Bezugspartition minimiert.

12. Vorrichtung zur Codierung (CO) eines Bilds oder einer Bilderfolge, die einen Datenstrom (F) erzeugt, der Daten enthält, die für mindestens eine Partition eines Blocks eines aktuellen Bilds repräsentativ sind, wobei die Vorrichtung Prädiktionseinrichtungen eines Bewegungsvektors der mindestens einen Partition des Blocks enthält, **dadurch gekennzeichnet, dass** die Prädiktionseinrichtungen in einer Prädiktionsvorrichtung (PREDCO) gemäß der Vorrichtung nach Anspruch 11 enthalten sind.

13. Vorrichtung (DO) zur Decodierung eines Datenstroms (F), der für ein Bild oder eine Bilderfolge repräsentativ ist, wobei der Strom (F) Daten aufweist, die für mindestens eine Partition eines Blocks eines aktuellen Bilds repräsentativ sind, wobei die Vorrichtung Prädiktionseinrichtungen eines Bewegungsvektors der mindestens einen Partition des Blocks enthält, **dadurch gekennzeichnet, dass** die Prädiktionseinrichtungen in einer Prädiktionsvorrichtung (PREDDO) gemäß der Vorrichtung nach Anspruch 11 enthalten sind.

14. Computerprogramm, das Anweisungen aufweist, um das eine oder andere der Verfahren nach einem der Ansprüche 1 bis 10 durchzuführen, wenn es auf einem Computer ausgeführt wird.

**Claims**

1. Method for predicting a motion vector of at least one partition (P1; MB$_N$) of a block of a current image with respect to a motion vector of at least one reference partition (Pr'1; MBr$_{N-1}$) of a reference block corresponding to the current block, in a reference image which is different from the current image and which is partitioned into a plurality of n reference blocks (r'1, r'2, ..., r'n), said motion vector of said at least one partition of the block of the current image pointing, in the reference image, to said at least one reference partition which has the same shape as said at least one partition of the block of the current image,

said method being **characterized in that,** in the case in which said at least one reference partition overlaps a set of k reference blocks from among said plurality of n reference blocks (r'1, r'2,...,r'n) of the reference image, with k≤n, said motion vector of said at least one partition of the block of the current image is determined on the basis of at least one reference motion vector belonging to a set of k reference motion vectors (MVr'1, MVr'2, ..., MVr'k) associated respectively with the k overlapped reference blocks, the determination of the motion vector of said at least one partition of the block of the current image comprising the steps of:

- selecting a particular point of the reference partition, said particular point being the centre of said reference partition,
- selecting the reference motion vector associated with the overlapped reference block which contains the centre of said reference partition,

the centre of said reference partition being calculated as the point which minimizes the sum of the distances with respect to all the points of said reference partition.

2. Prediction method according to Claim 1, wherein said determined motion vector is a predicted motion vector which is equal to the selected reference motion vector.

3. Prediction method according to Claim 1 or Claim 2, wherein the shape of the partition of the block of the current image belongs to the group comprising:

   - a rectangular shape,
   - a square shape,
   - a geometrical shape other than rectangular or square.

4. Prediction method according to any one of Claims 1 to 3, comprising the following:

   - comparing said determined motion vector with at least one other motion vector which is determined according to a determination method which is different from that for said determined motion vector, said comparison being implemented according to a coding performance criterion,
   - from among the determined motion vector and said at least one other determined motion vector, selecting the one which optimizes the prediction according to said criterion.

5. Prediction method according to Claim 4, wherein the determination of said at least one other motion vector comprises the steps of:

   - calculating the number of pixels which are shared by the corresponding reference partition and the k overlapped reference partitions, respectively,
   - comparing the calculated number of shared pixels between the k overlapped reference partitions, on the basis of a predetermined comparison criterion.

6. Prediction method according to Claim 4, wherein the determination of said at least one other motion vector comprises the steps of:

   - calculating, for each of the k overlapped reference partitions, a coefficient which is a function of the spatial gradient of said corresponding reference partition,
   - selecting the coefficient the calculated value of which is the highest,
   - selecting the reference motion vector which corresponds to the overlapped reference partition the coefficient of which was selected.

7. Prediction method according to Claim 4, wherein the determination of said at least one other motion vector comprises the steps of:

   - calculating, for each of the k overlapped reference partitions, a coefficient which is a function of the spatial gradient of said corresponding reference partition,
   - calculating the average of the k reference motion vectors associated respectively with the k overlapped reference partitions, said average being weighted by said k calculated coefficients.

8. Prediction method according to Claim 4, wherein the determination of said at least one other motion vector comprises the steps of:

   - identifying, in the corresponding reference partition, a feature relating to the content of the image,
   - selecting the reference motion vector associated with the overlapped reference partition which contains said feature.

9. Method for coding an image or a sequence of images generating a data stream (F) including data representative of at least one partition of a block of a current image, said method comprising a step of predicting a motion vector of said at least one partition,
said method being **characterized in that** said prediction is performed in accordance with the method according to any one of Claims 1 to 8.

10. Method for decoding a data stream (F) representative of an image or of a sequence of images, said stream including data representative of at least one partition of a block of a current image, said method comprising a step of predicting a motion vector of said at least one partition,
said method being **characterized in that** said prediction is performed in accordance with the method according to any one of Claims 1 to 3 and 5 to 8.

11. Device (PREDCO) for predicting a motion vector of at least one partition (P1; $MB_N$) of a block of a current image with respect to a motion vector of at least one reference partition (Pr'1; $MBr_{N-1}$) of a reference block corresponding to the current block, in a reference image which is different from the current image and which is partitioned into a plurality of n reference blocks (r'1, r'2,...,r'n) which have already been coded and decoded, said motion vector of said at least one partition of the block of the current image pointing, in the reference image, to said at least one reference partition which has the same shape as said at least one partition of the block of the current image, the prediction device being **characterized in that,** in the case in which said at least one reference partition overlaps a set of k reference blocks from among said plurality of n blocks (r'1, r'2, ...,r'n) of the reference image, with $k \leq n$, the prediction device comprises a calculation module (CAL) which is able to determine said motion vector of said at least one partition of the block of the current image on the basis of at least one reference motion vector belonging to a set of k reference motion vectors (MVr'1, MVr' 2, ..., MVr' k) associated respectively with the k overlapped reference blocks,
said calculation module comprising:

- means for selecting a particular point of said at least one reference partition, said particular point being the centre of said reference partition,
- means for selecting the reference motion vector associated with the overlapped reference block which contains the centre of said reference partition,

the centre of said reference partition being calculated as the point which minimizes the sum of the distances with respect to all the points of said reference partition.

12. Device (CO) for coding an image or a sequence of images generating a data stream (F) including data representative of at least one partition of a block of a current image, said device comprising means for predicting a motion vector of said at least one partition of said block,
**characterized in that** said prediction means are contained in a prediction device (PREDCO) in accordance with the device according to Claim 11.

13. Device (DO) for decoding a data stream (F) representative of an image or of a sequence of images, said stream (F) including data representative of at least one partition of a block of a current image, said device comprising means for predicting a motion vector of said at least one partition of said block,
**characterized in that** said prediction means are contained in a prediction device (PREDDO) in accordance with the device according to Claim 11.

14. Computer program including instructions for implementing one or other of the methods according to any one of Claims 1 to 10, when it is executed on a computer.

N-1 BR'3 N

BR'2

MBC_N-1 MV

BR'1

BR'4

BR3

BR2 BR4

BR1

MBC_N

ART ANTERIEUR

**Fig. 1A**

P1
P2 P3

P4

MBC_N

P5 P6 P7 P8

P1 P2 P3 P4

P5
P6
P7
P8

MBC_N

ART ANTERIEUR

P1 P2

P3

MBC_N

**Fig. 1B**

BR'2 N-1 MVp1 BR2 BR3 P1 P3 BR4 N

P'1 BR1

BR'3

BR'4

BR'1 MBC_N-1 P2 MBC_N

ART ANTERIEUR

**Fig. 1C**

MB$_N$

| | |
|---|---|
| TYPE PARTITION. | C0 |

| | |
|---|---|
| PARTITION. MB$_N$ P1,....,Pp | C1 |

| | |
|---|---|
| TRANSMISSION MB$_N$ PART. | C2 |

| | |
|---|---|
| PARTITION. MBr$_{N-1}$ Pr'1,....,Pr'p | C3 |

**Fig. 2**

| | |
|---|---|
| DETERMIN. MVp1,.....,MVpp | C4 |

| | |
|---|---|
| DECISION | C5 |

| | |
|---|---|
| COD. | C6 |

BD

I$_N$   MB$_N$

4x4

PREDCO

PMB

CAL

DCNCO

TQCO

TQICO

SP   PMBCO

CE

**Fig. 3**

CO

F

**Fig. 4**

**Fig. 5**

**Fig. 6**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE G LAROCHE ; J. JUNG ; B. PESQUET-POPESCU.** *IEEE Transactions on Circuits and System for Vidéo Technology,* Septembre 2008, vol. 18, 1247-1257

- **JUAN LIU et al.** Adaptive Motion Vector Prediction Based on Spatiotemporal Correlation. *International Conférence on Wireless Communications, Networking and Mobile Computing,* 2006
- **G.J. SULLIVAN ; T.WIEGAND.** Rate-distortion optimization for video compression. *IEEE Signal Proc. Mag.,* 1998, 74-90